# EUROPEAN PATENT APPLICATION

(11) **EP 0 700 174 A1**
(43) Date of publication of application: **06.03.1996**
(21) Application number: 95305688.4
(22) Date of filing: 15.08.1995
(51) Int. Cl.: H04B 7/06

(54) **Wireless local radio link telecommunications apparatus**

(30) Priority: 29.08.1994 US 297679
(71) Applicant: AT&T Corp., New York, NY 10013-2412 (US)
(72) Inventor: Cheng, Terry Si-Fong, Randolph, New Jersey 07869 (US)
(74) Representative: Buckley, Christopher Simon Thirsk

(57) **Abstract**

A wireless local radio link apparatus (10) providing a communications interface between a telecommunications network (13) and a network subscriber includes separate base (11) and handset units (12) that are in radio communication with one another during periods of use. Each unit includes transmit circuitry (51,21,22; 21a,22a) that converts incoming communication signals into radio frequency signals which are then broadcast to the other unit, and receive circuitry (32,31,52;32a.31a) that converts radio frequency signals received from the other unit into appropriate outgoing communications signals. The quality and recoverability of the outgoing signals of at least one of the units, preferably the base station (11), is enhanced by providing the other unit with redundant transmit circuits (21n,22n) each broadcasting through a different one of physically spaced antennas (19a,19n) for providing path diversity in the respectively transmitted signals. In addition, a time delay (34n) is imposed on the radio frequency signal broadcast through one antenna relative to that broadcast by the other antenna of the enhanced unit to thereby provide time diversity between the radio frequency signals traveling along the different paths from the respective antennae of the enhanced unit to the other unit. The magnitude of the imposed time delay is at least equal to that required for the receive circuitry of the other unit to separately and individually convert the received radio frequency signals for subsequent combination.

## Description

### FIELD OF THE INVENTION

The present invention relates to the telecommunications field in general, and more particularly to a transceiver apparatus and system configured for use in wireless local communications applications.

### BACKGROUND OF THE INVENTION

There are already known various telecommunications and telephone systems, among them ones that enable the user to freely move about while communicating without unnecessary concern about or being hampered by the cord or wire used in traditional telephone apparatus for connecting the handset to the base unit. Systems and apparatus of this type, referred to herein as wireless, are gaining acceptance and experiencing increased popularity not only among business people but also in the general population. Beyond the obvious convenience of not being umbilically tied to the base unit, such apparatus permits one to be reached at, or to reach other users or subscribers from, otherwise inaccessible locations as well as while in transit between locations.

Cellular and/or mobile communications systems, whether using terrestrial or satellite-based transmitters and receivers for establishing direct communication links with subscribers, are quite well suited for the above purposes, especially when it is desired that any individual subscriber not be limited to a particular location (e.g. one's residence and vicinity), locality (e.g. a city or town) or area (e.g. a metropolitan region) when making or receiving telephone calls. However, these approaches also have certain disadvantages. For one, the cost of establishing each coverage zone (i.e. the area within which it is possible to conduct reliable, direct communications between a portable telephone apparatus and the central transmitter/receiver/switching equipment) is quite high, making it prohibitively expensive or at least impractical to install ground-based systems in all but highly populated urban and suburban areas and the most frequently traveled corridors therebetween. Moreover, given the considerable size of each of the coverage zones served by the respective central equipment -- combined with the fact that reception may be poorer in some parts of each coverage zone than in others due to the presence of signal-attenuating obstructions -- the power levels of the signals emitted by the central equipment and by the individual portable telephone apparatus must be relatively high. This, in turn, results in a substantial degree of overlap between or among adjacent and sometimes even physically spaced or separated coverage zones, with an attendant sizable reduction in the number of communication channels that are available for use in each of the zones without interfering with other communications taking place in adjacent or distant zones. Inasmuch as the number of channels available for wireless communications or radio telephony is by no means unlimited, and given the limited nature of that portion of the wavelength spectrum dedicated to communications of this type and the need for separating adjacent carrier frequencies by respective guard bands, this further reduction in the number of usable channels or carrier frequencies in each of the coverage zones constitutes a considerable detriment that decreases the number of subscribers to whom such wireless communications services may be offered. This is true even if various spectrum utilization enhancement approaches -- such as time division multiplexing, code division multiple access (CDMA), frequency hopping, and/or spread spectrum techniques -- are employed to increase the number of communications that may be simultaneously accommodated in each affected coverage zone.

Also known, on the other hand, are so-called cordless telephones in which the telephone handset communicates with the base unit by way of a radio link. While this approach similarly permits the handset-carrying user to move relatively freely within a certain range from the base unit without loss of the communications connection or link, that range is finite and cannot be exceeded. Moreover, the exact boundaries of the range are usually unknown, are frequently irregular due to the presence of radio wave attenuating obstructions between the base unit and the handset, and may even vary over time as a function of atmospheric conditions and other factors. As a result, it is impractical or impossible to set the power of the signals transmitted between the base unit and the handset to such a level that the communication range will coincide with the area of interest, such as within an office or residence, and no more. In other words, the signals transmitted by the base unit and by the handset may unintendedly be received or interpreted outside of the area of interest, and may even interfere with third party communications taking place in surrounding or otherwise nearby areas. This last problem is somewhat alleviated by the fact that current cordless telephones are capable of operating at any of several carrier frequencies selected or selectable by the equipment itself and/or its user, thus making it possible to select a communication channel with minimum interference for the particular communication, even while in progress. Here again, however, the number of available channels is quite limited -- even more so, by several orders of magnitude, than in cellular or mobile telephone systems -- while the potential degree of overlap with other communication ranges is considerable, making this approach far less than ideal for relatively densely populated areas.

### SUMMARY OF THE INVENTION

The present invention provides a wireless local radio link apparatus for use as an interface between a telecommunications network and a subscriber. The apparatus includes a base unit and a separate but associated handset unit. Each of the two units includes a transmit circuit including input means for incoming signals from the network and from the subscriber, respectively, and means for converting the incoming signals into corresponding radio frequency signals. Each unit also includes means having one antenna for broadcasting the corresponding radio frequency signals and for capturing radio frequency signals arriving from the broadcasting means of the other unit, and a receive circuit having means for converting the captured radio frequency signals into corresponding outgoing signals, and means for presenting the outgoing signals to the network or to the subscriber. In accordance with the invention, there is further provided a means for enhancing the quality of the outgoing signals of at least one of the units, such enhancing means including an additional transmit circuit similar to the transmit circuit of the other of the units and connected to the input means thereof, and a second or additional antenna as a part of the broadcasting means of the other unit and mounted on the other unit in a spatially separated relationship to the first antenna. The converting means of the transmit circuit and of the additional transmit circuit are exclusively connected with the first antenna and with the spatially separated second antenna of the other unit for respective first and second of the radio frequency signals that are broadcast by the respective first and second antennae of the other unit to travel in spatially diverse paths before reaching the one antenna of the one unit. The enhancing means additionally includes means interposed between the input means and the second antenna of the other unit and operative for imposing on the second radio frequency signals a time delay relative to the first radio signals of a magnitude in excess of that needed for the receive circuit of the one unit to convert the first and second radio frequency signals captured by the first antenna of the one unit from the spatially diverse paths separately from one another for power-enhancing combination into the outgoing signals of the one unit.

In accordance with an advantageous aspect of the present invention, at least the said other unit further includes an additional receive circuit similar to the receive circuit. The additional receive circuit is connected with the second antenna and with the interposed means to the exclusion of the receive circuit for only the outgoing signals of the additional receive circuit for imposing the aforementioned time delay thereon for power-enhancing combination with the outgoing signals of the receive circuit of the other unit.

In a particularly advantageous implementation of the invention, the interposed means is located between the input means and the additional transmit circuit of the other unit, and/or between the additional receive circuit and the presenting means of the other unit.

Other features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims.

### BRIEF DESCRIPTION OF THE DRAWINGS

In the drawings, wherein like reference characters denote similar elements throughout the several views:
Fig. 1 is a block diagram of a local wireless link communications apparatus constructed in accordance with the teachings of the present invention;
Fig. 2 is a diagrammatic representation of a portion of a telecommunications network incorporating the local wireless link communications apparatus of the present invention; and
Fig. 3 is a diagrammatic representation of a portion of a telecommunications network incorporating the local wireless link communications apparatus of the present invention and that is particularly well suited for use in urban and other high subscriber density areas.

### DETAILED DESCRIPTION OF THE PREFERRED EMBODIMENTS

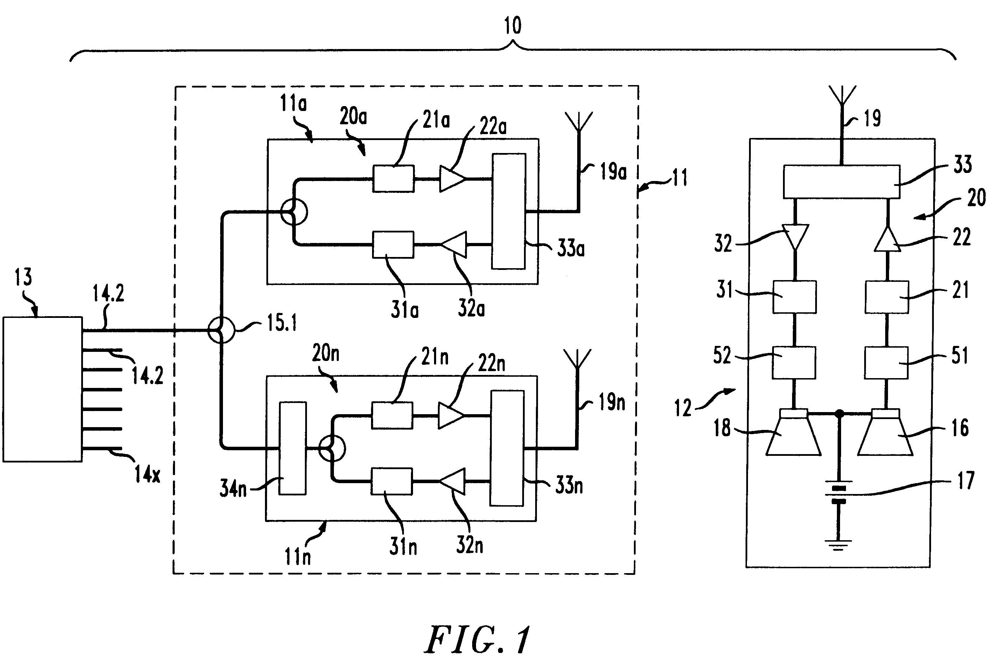

Referring now to the drawings in detail, and initially to Fig. 1 thereof, the reference numeral 11 designates a base unit, and reference numeral 12 an associated handset or hand-held unit, of a local wireless link apparatus 10 constructed in accordance with the teachings of the present invention. The handset 12 is separate and distinct from the base unit 11, being not physically connected to the base unit by any cord, cable, wire or other structure that would inhibit or limit the extent of possible movement of the handset 12 away from or relative to the base 11. Thus, even though the units 11 and 12 are for convenience shown in Fig. 1 as being located in relatively close proximity, such a relationship will most often be the case during periods of nonuse when the unit 12 may be accommodated in a cradle or a similar retaining portion of the base unit 11. When on the other hand the apparatus 10 is in use, the person or subscriber using it to communicate with another user of an associated telecommunications network 13 may freely move about with the handset unit 12 from one location to another, or use the unit 12 at a convenient location well remote from the base unit 11, without loss or impairment of communications functionality as hereinafter described.

To enable the user to make this uninhibited choice of selectively variable location within the operational communications range of the handset 12, the units 11 and 12 communicate by way of a local radio frequency or broadcast link. The operational range within which the radio communication link is effective (i.e. can be established and maintained) is typically somewhat and intentionally limited, generally covering an office, residence or similar premises and its immediate environs. One reason for this limited range is that it is desirable, and/or at times necessary, as in densely populated areas, to minimize interference between the local communication link and radio communications of other subscribers or radio frequency spectrum users by reducing the power of the transmissions emanating from the units 11, 12. Moreover, such power-limited minimization of the effective operational range also reduces the likelihood of undesired interception of one's communications by another located outside of the premises. On the other hand, the common presence of radio frequency signal attenuating obstructions within or about the premises requires that the power of the transmitted signals be increased to a level sufficient to establish and maintain the radio link into and from regions of the premises that are the most affected by such signal attenuation. Moreover, in radio communication systems that are designed to maintain and/or establish radio communication from a particular handset 12 -- even if situated beyond the operating range of the associated base unit 11, as by having such "roving" communication with this handset 12 handled by another base unit -- a certain amount of overlap between the operating ranges of neighboring base units 11 is needed to accommodate seamless communications between the affected base units 11 as the subscriber's handset 12 moves from one such range or zone to another. Furthermore, the size and/or the shape of the operating range of the respective unit 11 or 12 is at least on occasion further affected by atmospheric conditions such as changes in air humidity, events such as increased sunspot activity, and other influences. Given these countervailing considerations, the power level actually chosen for operating heretofore-known implementations of radio link equipment is usually a compromise, with a considerable safety margin on the side of higher power.

The virtual impossibility of confining the operational range of the radio link apparatus solely to the subscriber's premises, combined with the significant practical drawbacks of doing so, results in a substantial degree of overlap between the operating ranges of neighboring and even more remotely situated base units 11 and handsets 12. This, in turn, requires that measures to be taken -- at least in regions having a high density of current and/or prospective subscribers -- to reduce interference between discrete communications that are conducted on radio frequencies or within the limited number of radio frequency ranges to improve the quality (i.e. the signal-to-noise (S/N) ratio) of individual communications and to increase the number of communications that may be simultaneously conducted within the available frequency spectrum.

Approaches taken in the past to achieve this purpose have involved the use of various signal multiplexing techniques. One such technique is the so-called code distributed multiple access (CDMA) technique. The principles and various implementations of this approach are well known and do not require detailed discussion here. In any event, CDMA is a spread-spectrum technique that provides transmission by an originating unit of radio frequency signals that are earmarked for a respective intended destination unit, and that are so coded that only the intended destination unit is capable of picking them out of the radio frequency range, those signals appearing as background or "white" noise to all other units.

The circuitry of the receiving unit in the handset unit 12 that affects such differentiation or selection of the desired radio signals from background noise continuously examines the background noise for the presence of a match indicative of a communication intended for that receiving unit. Once a match is found, the receiving unit locks on or latches to the communication and continues to search for subsequent matches that confirm ongoing transmission of communications signals directed to that particular unit. However, if such subsequent match occurs within a predetermined period of time equal to less than the duration of the match pattern -- usually considerably less such, for example, as on the order of the time span of a constituent bit of the match pattern -- then the differentiating circuitry disregards or discards the match, and any accompanying communications data, to search for matches occurring thereafter. At times, the "overlap" in two matches may be simply the result of each having traversed a different propagation path, in which case some of the data of the intended communication will be irretrievably lost and thus cannot be used to reconstitute the relayed signal.

The present invention is of particular utility in systems that utilize the CDMA approach to radio spectrum utilization. In accordance with the invention, at least one of the units 11, 12 -- as and most typically the base unit 11 -- is formed by at least two parts or sections 11a, 11n. While using only the two sections 11a and 11n is sufficient in many applications, any number of additional such sections may be employed in conjunction with the sections 11a, 11n. In any event, the sections 11a, 11n are substantially the same, or at least closely similar, one to the other and to the other unit or handset 12 in many respects; as a consequence, the same reference characters employed for the handset 12 are also used in describing the elements of the base unit sections 11a, 11n, but supplemented by the respective suffixes a and n, and such components and their connections will be described only to the extent necessary to point out significant structural and operating differences therebetween.

The telecommunications network 13, which forms no part of the present invention, is the source of incoming signals for the base unit 11 that are to be broadcast to the handset 12. These signals are forwarded through a connection 14.1 -- which is one of a plurality of such connections 14.1 to 14.x connecting the network 13 with its respective individual subscribers -- to a junction 15.1 from which they are distributed as electrical signals to the sections 11a, 11n. The nature of the connection 14.1 (e.g. electrical data bus, coaxial cable, twisted wire pair, optical cable, radio frequency or other wireless link, etc.) and the character of the signals communicated thereby (e.g. electrical signals at baseband or radio frequencies, optical signals, etc.), while somewhat interdependent, may be selected as general matters of design choice from a range of available options. Where the signals are other than electrical the junction 15.1, in addition to distributing those signals, may also convert them to the appropriate electrical signals and perform an inverse conversion of oppositely-traveling signals from the sections 11a, 11n. In the handset 12 a built-in microphone 16, powered by a battery 17 or other energy source, provides the incoming signals (typically at baseband or audible frequencies) for processing by the circuitry of the handset. In any event, the incoming signals to the units 11, 12 carry the information that is to be conveyed from one user or subscriber to the network 13 and, from there, to the intended recipient user or subscriber. The handset 12 is further seen to include a built-in loudspeaker 18, also powered from the energy source 17, for issuing or outputting audible signals intended for the user of the handset.

The handset 12 and the sections 11a, 11n of the base unit 11 are equipped with separate antennas 19, 19a, 19n, and include like electrical circuits 20, 20a, 20n connected between each individual antenna 19, 19a, 19n and the respectively associated incoming signal source 13, 16. The handset circuit 20 includes a transmitting branch incorporating, in series, a converter device 51, a bandpass filter (BPF) 21 and an amplifier 22, and a receiving branch correspondingly having, in series, an amplifier 32, bandpass filter (BPF) 31 and a converter device 52. The signals unidirectionally passing through these two branches are conditioned therein for conversion to, or after having been converted from, radio frequency broadcast signals. The handset 12 further includes a duplexer device 33 connected with the antenna 19 on the radio frequency side, and with the associated ends of the transmit and receive branches of the circuit 20 on its other side, for combining and splitting the signals input thereto. As previously pointed out, the circuit 20a of the base unit section lla and the circuit 20n of the section lln of the base or repeater unit 11 are constructed and/or configured substantially the same as or equivalently to the handset circuit 20. The duplexer devices 33, 33a, 33n are of a type well known to those skilled in the pertinent arts. The converter devices 51, 52 of the handset 12 are likewise well known and will generally include radio frequency modulators/demodulators and multiplexers/demultiplexers, such as CDMA coders/decoders, all of conventional or otherwise known constructions the exact particulars of which form no part of the present invention.

In accordance with one aspect of the present invention there is further provided, as a part of the base unit section lln but not of the base unit part 11a or the handset 12, a time delay element or component 34n that delays signals passing therethrough by a predetermined time delay interval. The length of this interval, i.e. the amount of signal delay imposed thereby, is selected so as to assure that the signals transmitted by the base unit sections 11a, 11n to the handset 12 from the respective antennas 19a, 19n, after having been captured or received by the antenna 19 of the handset, are sufficiently spaced in time from one another in a lead-lag relationship as to be perceived and treated by the handset receive conversion device 52 as separate signals. This results in certain recovery of the data or energies carried by each such broadcast signal, rather than the later-in-time one of the two signals being ignored or discarded. In the opposite communication direction, the two separately converted, received (i.e. by the receive sections 11a, 11n) or occurring signals are also placed by the time delay element 34n in a similar lead-lag relationship, thereby broadening the respective combined signal and making it more easily perceptible and processable and recoverable by or in the network 13.

Having thus described the basic construction of the apparatus 10 of the present invention, its operation will now be described with continued reference to Fig. 1 of the drawings. As noted, the time delay element 34n creates, in signals originating in or provided from the network 13, a time-spaced or lead-lag relationship between the affected signals. Additionally, the two time-spaced radio frequency signals generated by the base unit 11 are each issued by a different one of the antennas 19a, 19n that are spatially separated one from the other and therefore propagate along slightly different paths to the antenna 19 of the handset 12. As a result of this space or path diversity, it is unlikely that both signals will be attenuated to the same or like extent by any intervening or otherwise interfering obstruction. Moreover, even if both signals are attenuated, the separate processing of the signals by virtue of their time diversity, and the ultimate combining of their energies at the handset 12, will still result in a S/N ratio at the handset that is sufficient for the receive converter device 52 to reliably detect and recover the coded signals destined for the handset from the background noise, even when the transmitted energy levels of the individual radio frequency signals are relatively low. Similar considerations also apply to transmissions between the handset and base unit in the opposite direction. As a result, the energy levels of the radio signals can be selected or set at a minimum level as though no attenuating obstruction will be present on the premises, and at still further reduced levels, without impairing the effective reliability of the radio link. This Permissible reduction in operating power also minimizes the possibility of interference with wireless communications concurrently taking place within the operating ranges or zones of adjacent or surrounding or otherwise closely proximate units 11 and/or 12 of the same or similar types.

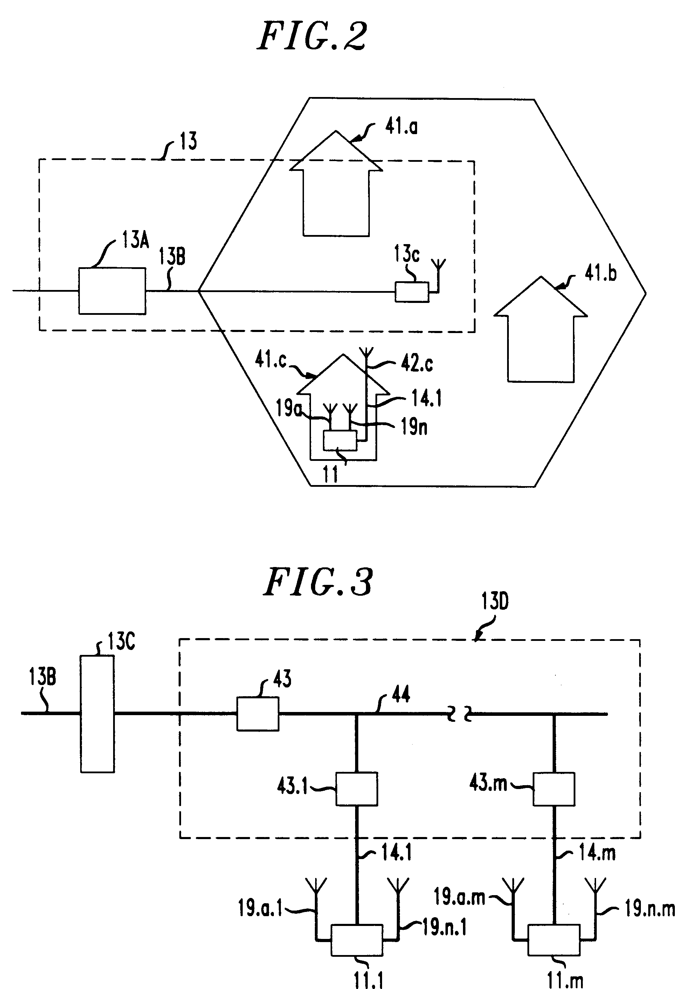

Fig. 2 depicts an implementation of a portion of a telecommunications network 13 that is particularly well suited for use in small indoor coverage areas such as single family homes and/or small office buildings and the like. As there shown, the network 13 includes a base station or base station controller 13A that is connected, by way of a telecommunications link 13B -- as, for example, of electrical or optical cable, or comprising a broadcast link or the like -- with a base station 13C. The base station 13C is intended to serve all network users or subscribers located in a local service area 40, as exemplified in Fig. 2 by the three subscriber residences or homes 41.a to 41.c in the zone or area 40. As shown in connection with the house 41.c, the transmission line 14.1 -- which is connected at one of its ends with the base or repeater unit 11, as for example illustrated in Fig. 1 and described hereinabove -- is connected at its other end with an outdoor antenna 42.c that communicates, over the airwaves, with the local base station radio port 13C whenever a communication is in progress between the subscriber located in the operating range of the unit 11 and another subscriber connected to the network 13. The antenna 42.c may comprise or be configured as a directional antenna so as to further reduce interference. In accordance with the present invention, the repeater or base unit 11 is of the two-section construction described by way of preferred example in conjunction with Fig. 1.

The Fig. 2 approach is, on the other hand, unlikely to yield cost-effective results in large indoor coverage areas such as airports, malls, apartment buildings and/or areas in which fiber and cable plants are already in place, such as existing CATV networks in residential areas. In such cases it is preferred, as shown in Fig. 3, to use a signal transport network 13D similar to the RF distribution of a CATV network which may include a shielded transmission line 44 -- and associated branch or tap lines 43.1 to 43.m -- to connect the local port 13C, which may still be constructed as a radio port insofar as its communication through the link 13B is concerned, with the individual repeater or base units 11.1 to 11.m of the Fig. 1 two-section construction with separate, physically spaced apart antennas 19a.1, 19n.1 and 19a.m, 19n.m. A comparison of Figs. 1 and 3 will also indicate that the base unit sections 11a, 11n may be physically separate or separable from one another, as is generally indicated in Fig. 1, enabling their disposition in different parts of the subscriber premises for achieving even greater path diversity. Alternatively, the sections lla, lln may be accommodated in a common housing to which the antennas of the base unit 11 are mounted in physically separated or spaced apart relation, as at different locations on the common housing such for example as indicated in Fig. 3 by the antennas 19a.1, 19n.1.

Thus, while there have been shown and described and pointed out fundamental novel features of the invention as applied to preferred embodiments thereof, it will be understood that various omissions and substitutions and changes in the form and details of the disclosed invention may be made by those skilled in the art without departing from the spirit of the invention. For example, it is also within the intended scope and contemplation of the invention that the handset 12, and/or base station 13C, in lieu of or in addition to the base unit 11, be constructed so as to incorporate two sections or parts (in the manner of the hereinabove disclosed base unit sections 11a, 11n) each of which is connected to a separate and distinct and physically spaced apart antenna mounted on or otherwise depending from the handset housing. It is the intention, therefore, to be limited only as indicated by the scope of the claims appended hereto.

## Claims

1. A wireless local radio link apparatus for use as an interface between a telecommunications network and a network subscriber, comprising:
a base unit and a wireless handset unit separate from said base unit, each of said base and handset units comprising:
input means for receiving incoming communications signals from one of the network and the subscriber;
a first transmit circuit for receiving the incoming communications signals from said input means for over-the-air broadcast of the signals as first radio frequency signals to the other of said units;
a first antenna connected to said first transmit circuit for broadcasting the first radio frequency signals from said first transmit circuit to the other said unit and for capturing radio frequency signals broadcast over-the-air from the first antenna of the other said unit; and
a first receive circuit connected to said first antenna for receiving the captured radio frequency signals from the first antenna and for presenting the captured radio frequency signals to one of the network and the subscriber as outgoing communications signals; and
one of said units further comprising:
a second transmit circuit for receiving the incoming communications signals from said input means for over-the-air broadcast of the signals as second radio frequency signals to said other unit;
a second antenna connected to said second transmit circuit for broadcasting the second radio frequency signals from said second transmit circuit to the other said unit and for capturing radio frequency signals broadcast over-the-air from the first antenna of said other unit, said second antenna of said one unit being disposed in Predeterminately spaced-apart relation to said first antenna of said one unit so that the first and second radio frequency signals broadcast by said first and second antennae of said one unit travel through spatially diverse paths to reach said first antenna of said other unit; and
time delay means interposed between said input means and said second antenna for imposing on said second radio frequency signals a predetermined time delay relative to said first radio signals so as to enhance recovery in said other unit of the communications signal broadcast as first and second radio frequency signals by said first and second antennae of said one unit.

2. A wireless local radio link apparatus in accordance with claim 1, wherein said time delay means is interposed between said input means and said second transmit circuit of said one unit.

3. A wireless local radio link apparatus in accordance with claim 1, wherein said receive circuit of said other unit comprises means for processing the captured radio frequency signals and for converting the captured radio frequency signals to the outgoing communications signals, said processing and converting means being operable for processing captured radio frequency signals spaced apart by at least a minimum time interval, and wherein the predetermined time delay of said time delay means comprises at least said minimum time interval.

4. A wireless local radio link apparatus in accordance with claim 1, wherein said one unit further comprises a second receive circuit connected to said second antenna for receiving the captured radio frequency signals from said first antenna of said one unit, and connected to said time delay means for outputting the captured radio frequency signals to one of the network and the subscriber as outgoing communications signals delayed by said predetermined time delay.
